# EUROPEAN PATENT SPECIFICATION

(11) **EP 3 153 678 B1**
(45) Date of publication and mention of the grant of the patent: **17.07.2019**
(21) Application number: 16192186.1
(22) Date of filing: 04.10.2016
(51) Int. Cl.: F01P 5/04, F01P 11/12, A01D 41/12

(54) **AGRICULTURAL HARVESTER**
LANDWIRTSCHAFTLICHE ERNTEMASCHINE
MOISSONNEUSE AGRICOLE

(30) Priority: 06.10.2015 US 201514876037
(43) Date of publication of application: 12.04.2017
(73) Proprietor: CNH Industrial Belgium nv, 8210 Zedelgem (BE)
(72) Inventor: Davenport, Trey, Gainesville, Georgia 30501 (US); Ivey, Cameron, Union Grove, Wisconsin 53182 (US); Beichner, Joshua, New Holland, Pennsylvania 17557 (US); Harmon, Zachary, East Earl, Pennsylvania 17519 (US)
(74) Representative: CNH Industrial IP Department

(56) References cited:
- DE-A1- 19 836 696
- US-A1- 2013 284 419
- US-B1- 6 193 772
- US-B1- 6 217 637

## Description

### BACKGROUND OF THE INVENTION

The present invention relates to agricultural harvesters such as combines, and, more particularly, to the air screen cleaning or aspiration system.

An agricultural harvester known as a "combine" is historically termed such because it combines multiple harvesting functions with a single harvesting unit, such as picking, threshing, separating and cleaning. A combine includes a header which removes the crop from a field, and a feeder housing which transports the crop matter into a threshing rotor. The threshing rotor rotates within a perforated housing, which may be in the form of adjustable concaves, and performs a threshing operation on the crop to remove the grain. Once the grain is threshed it falls through perforations in the concaves onto a grain pan. From the grain pan the grain is cleaned using a cleaning system, and is then transported to a grain tank onboard the combine. The cleaning system includes a cleaning fan which blows air through oscillating sieves to discharge chaff and other debris toward the rear of the combine. Non-grain crop material such as straw from the threshing section proceeds through a straw chopper and out the rear of the combine. When the grain tank becomes full, the combine is positioned adjacent a vehicle into which the grain is to be unloaded, such as a semi-trailer, gravity box, straight truck, or the like; and an unloading system on the combine is actuated to transfer the grain into the vehicle.

More particularly, a rotary threshing or separating system includes one or more rotors which can extend axially (front to rear) or transversely within the body of the combine, and which are partially or fully surrounded by a perforated concave. The crop material is threshed and separated by the rotation of the rotor within the concave. Coarser non-grain crop material such as stalks and leaves are transported to the rear of the combine and discharged back to the field. The separated grain, together with some finer non-grain crop material such as chaff, dust, straw, and other crop residue are discharged through the concaves and fall onto the grain pan where they are transported to the cleaning system. Alternatively, the grain and finer non-grain crop material may also fall directly onto the cleaning system itself.

The cleaning system further separates the grain from non-grain crop material, and typically includes a fan directing an air flow stream upwardly and rearwardly through vertically arranged sieves which oscillate in a fore and aft manner. The air flow stream lifts and carries the lighter non-grain crop material towards the rear end of the combine for discharge to the field. Clean grain, being heavier, and larger pieces of non-grain crop material, which are not carried away by the air flow stream, fall onto a surface of an upper sieve (also known as a chaffer sieve) where some or all of the clean grain passes through to a lower sieve (also known as a cleaning sieve). Grain and non-grain crop material remaining on the upper and lower sieves are physically separated by the reciprocating action of the sieves as the material moves rearwardly. Any grain and/or non-grain crop material remaining on the top surface of the upper sieve are discharged at the rear of the combine. Grain falling through the lower sieve lands on a bottom pan of the cleaning system, where it is conveyed forwardly toward a clean grain auger.

The clean grain auger is positioned below the lower sieve, and receives clean grain from each sieve and from the bottom pan of the cleaning system. The clean grain auger then augers the clean grain laterally sideways to a clean grain elevator, which in turn conveys the clean grain to a grain tank onboard the combine.

US Patent No. 6,193,772 discloses a harvesting machine having a selectively engageable suction cleaning for a filter. The cooling-air cleaning device being driven by means of an engageable drive means. One aspect is that the drive means is engaged in dependence on a value measured by sensors.

US Patent 3,415,040 discloses a control for cleaning an air screen by interrupting the airflow through the screen using a pressure sensitive device that monitors the air pressure within the air chute and will cycle the automatic cleaner in response to a predetermined reduction in air pressure. Further, it discloses a baffle within an air chute that is moved to a position that will choke off the flow of air through the air-chute in response to a decrease in air pressure within the air-chute. Still another object is to provide means for reversing the direction of air flow through the air-screen in response to a decrease in air pressure within the air-chute.

US Patent 5,217,512 discloses an Apparatus for Filtering Debris from a Moving Airstream Operation including a suction nozzle controlled in relation to a pressure drop across the filter to maintain the pressure drop within a predetermined desired range.

US Patent No. 4,786,293 discloses a controller for a reverse pulse air filter including the detection of a pressure differential across the air filter that is greater than or equal to the reference set point pressure differential, causing a cleaning cycle to be initiated.

US Patent No. 5,006,135 discloses a Self Cleaning Screen with a rotation rate of a baffle on the order of one to five rpm which gives a period during which the air stream is halted which is sufficient to allow the collected material to fall from the screen.

US Patent No. 6,217,637 discloses a Multiple Stage High Efficiency Rotary Filter System with a vacuum arm that extends from the outer vacuum port to the horizontal drum suction sweep, which extends horizontally over the full length of the horizontal surface of the drum. As the drum rotates, the vacuum produced by the suction of a variable speed fan. The drum speed and the vacuum level can be increased simultaneously.

US Patent No. 4,753,665 discloses a Method and Apparatus for Controlling the Suction Pressure in a Dust Collection Duct wherein the suction pressure (or any other physical characteristic of the air in the duct which relates to the suction pressure) is detected, and a signal from this detector is compared with a signal corresponding to a desired suction pressure and the output signal from the comparator used to control the speed of the driving motor for the suction fan.

What is needed in the art is an efficient control regime for coordinating the cleaning cycle of the air screen.

### SUMMARY OF THE INVENTION

The present invention provides for a coordination between the suck-off fan and the cooling fan speeds.

The invention is directed to an agricultural vehicle including a fluid cooling system for cooling a component onboard the agricultural vehicle. The fluid cooling system including a housing with an air screen, and a cooling unit arranged within the housing, the cooling unit having a cooling fan with a rotational speed, and an aspiration system. The aspiration system being configured to clean debris from the air screen, and includes a wand, a suck-off fan and a controller. The wand and the air screen are arranged to move such that the wand, over a period of time, covers a substantial portion of the air screen. The suck-off fan suck air from the wand and has a rotational speed. The controller is in communication with the suck-off fan and the cooling fan, and is configured to coordinate an increase in the speed of the suck-off fan when the speed of the cooling fan decreases.

The invention can be used in a method of cleaning an air screen on an agricultural vehicle having an internal combustion engine and a fluid cooling system for cooling at least one component onboard the agricultural vehicle, the fluid cooling system being positioned in association with the internal combustion engine, and includes a housing, and at least one cooling unit arranged within the housing, the cooling unit including at least one cooling fan having a rotational speed, the housing including at least one air screen. The method includes the steps of moving, coupling and coordinating. The moving step moves at least one of a wand and the air screen such that the wand over a period of time covers a substantial portion of the air screen. The coupling step couples a suck-off fan in fluid communication with the wand, the suck-off fan having a rotational speed. The coordinating step includes coordinating an increase in the speed of the suck-off fan when the speed of the cooling fan decreases.

An advantage of the present invention is that the suck-off fan can more effectively clean the screen when the cooling fan speed is reduced.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a side view of an embodiment of an agricultural vehicle in the form of a combine, which includes an embodiment of a cooling system;
Fig. 2 is a side view of a portion of the internal components of the combine shown in Fig. 1, including the grain tank, IC engine and cooling system shown in Fig. 1;
Fig. 3 is a side view of the internal components shown in Fig. 2;
Fig. 4 is a side view of the cooling package shown in Figs. 2 and 3; and
Fig. 5 schematically illustrates an embodiment of an aspiration system of the present invention used with the cooling system of Figs. 1-4.

Corresponding reference characters indicate corresponding parts throughout the several views. The exemplification set out herein illustrates an embodiment of the invention, in one form, and such exemplification is not to be construed as limiting the scope of the invention in any manner.

### DETAILED DESCRIPTION OF THE INVENTION

The terms "grain", "straw" and "tailings" are used principally throughout this specification for convenience but it is to be understood that these terms are not intended to be limiting. Thus "grain" refers to that part of the crop material which is threshed and separated from the discardable part of the crop material, which is referred to as non-grain crop material, MOG or straw. Incompletely threshed crop material is referred to as "tailings". Also the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-and-aft direction of the agricultural harvester and are equally not to be construed as limiting.

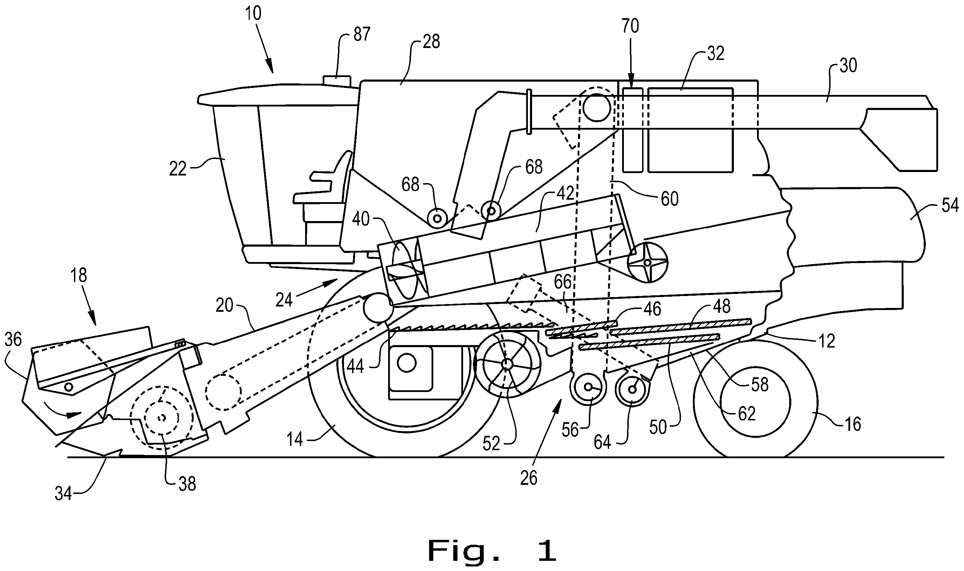

Referring now to the drawings, and more particularly to Fig. 1, there is shown an agricultural harvester in the form of a combine 10, which generally includes a chassis 12, ground engaging wheels 14 and 16, header 18, feeder housing 20, operator cab 22, threshing and separating system 24, cleaning system 26, grain tank 28, and unloading auger 30.

Front wheels 14 are larger flotation type wheels, and rear wheels 16 are smaller steerable wheels. Motive force is selectively applied to front wheels 14 through a power plant in the form of a diesel engine 32 and a transmission (not shown). Although combine 10 is shown as including wheels, is also to be understood that combine 10 may include tracks, such as full tracks or half tracks.

Header 18 is mounted to the front of combine 10 and includes a cutter bar 34 for severing crops from a field during forward motion of combine 10. A rotatable reel 36 feeds the crop into header 18, and a double auger 38 feeds the severed crop laterally inwardly from each side toward feeder housing 20. Feeder housing 20 conveys the cut crop to threshing and separating system 24, and is selectively vertically movable using appropriate actuators, such as hydraulic cylinders (not shown).

Threshing and separating system 24 is of the axial-flow type, and generally includes a rotor 40 at least partially enclosed by and rotatable within a corresponding perforated concave 42. The cut crops are threshed and separated by the rotation of rotor 40 within concave 42, and larger elements, such as stalks, leaves and the like are discharged from the rear of combine 10. Smaller elements of crop material including grain and non-grain crop material, including particles lighter than grain, such as chaff, dust and straw, are discharged through perforations of concave 42. Threshing and separating system 24 can also be a different type of system, such as a system with a transverse rotor rather than an axial rotor, etc.

Grain which has been separated by the threshing and separating assembly 24 falls onto a grain pan 44 and is conveyed toward cleaning system 26. Cleaning system 26 may include an optional pre-cleaning sieve 46, an upper sieve 48 (also known as a chaffer sieve), a lower sieve 50 (also known as a cleaning sieve), and a cleaning fan 52. Grain on sieves 46, 48 and 50 is subjected to a cleaning action by fan 52 which provides an air flow through the sieves to remove chaff and other impurities such as dust from the grain by making this material airborne for discharge from straw hood 54 of combine 10. Grain pan 44 and pre-cleaning sieve 46 oscillate in a fore-to-aft manner to transport the grain and finer non-grain crop material to the upper surface of upper sieve 48. Upper sieve 48 and lower sieve 50 are vertically arranged relative to each other, and likewise oscillate in a fore-to-aft manner to spread the grain across sieves 48, 50, while permitting the passage of cleaned grain by gravity through the openings of sieves 48, 50.

Clean grain falls to a clean grain auger 56 positioned crosswise below and toward the front of lower sieve 50. Clean grain auger 56 receives clean grain from each sieve 48, 50 and from bottom pan 58 of cleaning system 26. Clean grain auger 56 conveys the clean grain laterally to a generally vertically arranged grain elevator 60 for transport to grain tank 28. Tailings from cleaning system 26 fall to a tailings auger trough 62. The tailings are transported via tailings auger 64 and return auger 66 to the upstream end of cleaning system 26 for repeated cleaning action. A pair of grain tank augers 68 at the bottom of grain tank 28 convey the clean grain laterally within grain tank 28 to unloading auger 30 for discharge from combine 10.

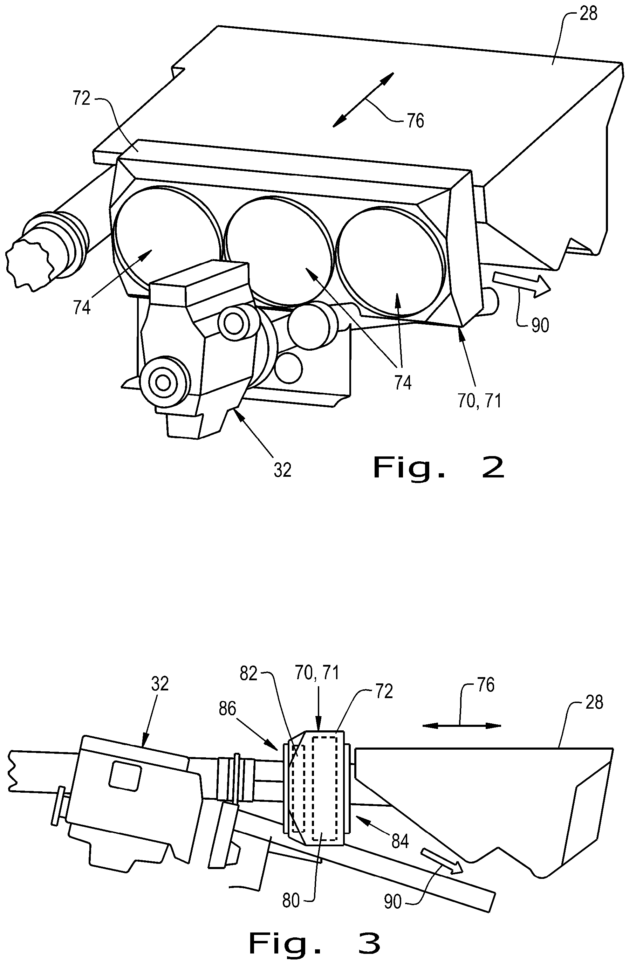

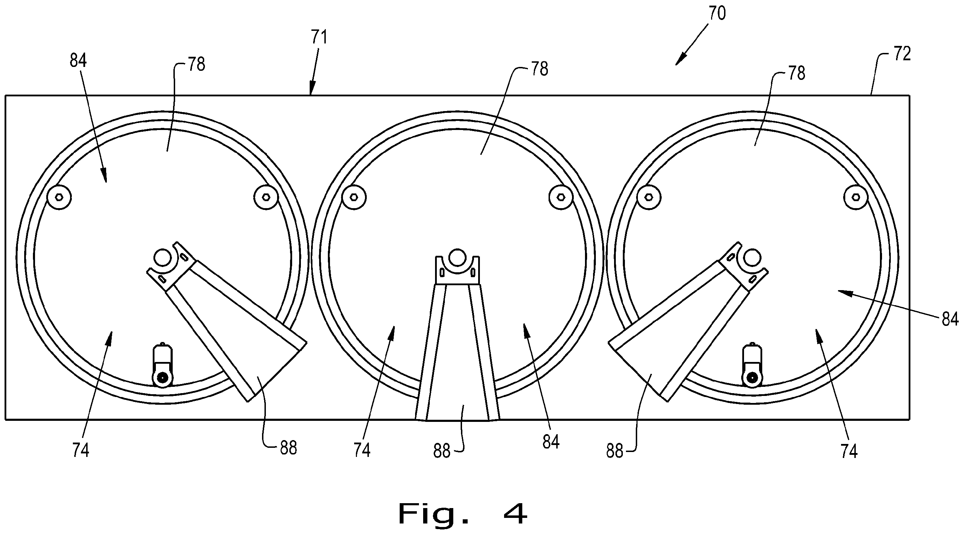

The combine 10 includes a cooling system 70 for cooling at least one component onboard the combine 10 (Figs. 2-6). For example, the cooling system 70 can be used to cool the IC engine 32, exhaust and combustion gases associated with the IC engine 32, a hydraulic circuit (not shown), an air conditioning (A/C) circuit 87 associated with the operator cab 22, and/or other fluid carrying components onboard the combine 10.

The cooling system 70 is in the form of an integral cooling package 71 that is positioned between the IC engine 32 and the grain tank 28. The cooling package 71 includes a housing 72, and a plurality of cooling units 74 arranged in a side-to-side manner within the housing 72, transverse to a fore-aft direction 76 of the combine 10. Each cooling unit 74 generally includes a screen 78, a fluid cooler 80 and a fan 82. The screen 78 is at the inlet 84 of the corresponding cooling unit 74 adjacent to the grain tank 28, and the fan 82 is at the outlet 86 of the corresponding cooling unit 74 adjacent to the IC engine 32. The inlet 84 allows air to be drawn into the respective cooling unit 74, and the outlet 86 allows air to be exhausted from the respective cooling unit 74.

In the illustrated embodiment, the IC engine 32 is located rearward of the grain tank 28. Thus, the inlet 84 is located at the front surface (not numbered) of the cooling package 71 which faces toward the rear surface the grain tank 28. Conversely, the outlet 86 is located at the rear surface (not numbered) of the cooling package 71 which faces toward the front surface the IC engine 32. In the event that the IC engine 32 is located below or in front of the grain tank 28, then the inlet/front surface of the cooling package 71 can face toward the bottom or front surface, respectively, of the grain tank 28.

Each fluid cooler 80 is configured for cooling a corresponding type of fluid, such as a cooling fluid for an IC engine, hydraulic oil in a hydraulic power circuit, a refrigerant fluid used in an A/C circuit, etc. The fluid coolers can be configured with any combination of cooling circuits, and can all be the same, partially the same, or all different. In the event that one of more of the fluid coolers 80 are configured different relative to each other, then those cooling circuits are likely independent from each other. However, if multiple fluid coolers are configured the same, then those cooling circuits can be independent from each other or can be coupled together in series or parallel. In the illustrated embodiment, the three fluid coolers 80 are each assumed to be configured differently from each other and independent from each other. One fluid cooler 80 is configured as a radiator for the IC engine 32, another fluid cooler 80 is configured as an oil cooler for a hydraulic circuit, and the third fluid cooler 80 is configured as a heat exchange coil for an A/C circuit 87 associated with the operator cab 22. The fluid coolers 80 can also be configured as other types of fluid coolers, such as an intercooler or an aftercooler.

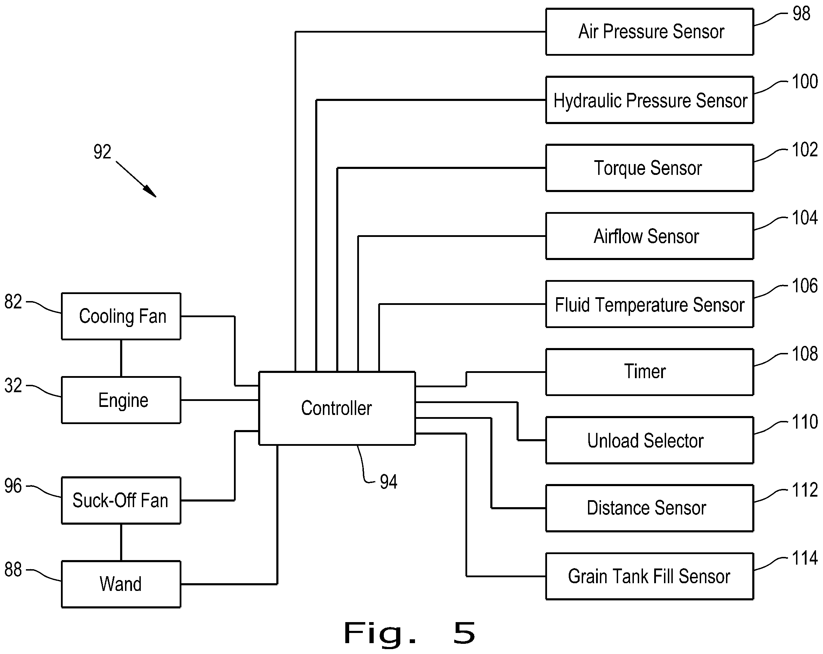

Each screen 78 functions as a coarse filter to filter out dust, chaff, etc. from entering the corresponding cooling unit 74. In the illustrated embodiment, each screen 78 is configured as a rotating screen which is positioned generally vertical (Figs. 2-4) or at an acute angle to the vertical. Each rotating screen 78 can include a cleaner 88, in the form of a wand 88 that is a part of an aspiration system 92 (see Fig. 5), which removes chaff, dirt, etc. from the screen as it rotates. Each screen 78 can also be configured to be movable toward and away from the respective cooling unit 74 for cleaning of and access to the respective cooling unit 74. The screen 78 can be manually movable or can be movable using a suitable powered actuator, such as a pneumatic actuator or an electric motor and gear arrangement.

Each cooling fan 82 is configured for moving air through the respective cooling unit 74 for effective liquid-to-air cooling. The rotational speed, blade pitch angle, etc. can of course vary, depending on the particular needs of the cooling unit 74. The air flow on the outlet side of the cooling unit 74 can be used for cooling and/or cleaning an area onboard the combine 10. For example, air from the outlet 86 of the cooling unit 74 configured as a radiator can be used to both cool, clean and inhibit buildup of dirt and chaff on the IC engine 32.

One or more of the cooling fans 82 can also be configured for reversal of the airflow direction through the corresponding cooling unit 74. This can be accomplished using a reversible motor, or the blades can have a varying pitch to reverse the air flow direction. When the air is then flowing in the opposite direction, such that the inlet 84 is in fact the outlet of the cooling unit 74, then this flow of air can be used to clean the screen 78. Alternatively, the reverse flowing air can be used to clean and/or cool other parts of the combine 10. For example, referring to Figs. 2 and 3, air flowing in a reverse direction 90 can be directed under the grain tank 28 toward the outer surface of the concaves for cleaning this area within the combine 10.

Referring additionally now to Fig. 5 there is shown, in a schematic form, an aspiration system 92, having a controller 94 that is in communication with engine 32, cooling fan 82, wand 88 and a suck-off fan 96 that provides a negative airflow to wand 88 for the removal of debris from screen 78. Controller 94 may also be in communication with an air pressure sensor 98, a hydraulic pressure sensor 100, a torque sensor 102, an airflow sensor 104, a temperature sensor 106, a timer 108, an unload selector 110, a distance sensor 112 and a grain tank fill sensor 114.

The rotating or stationary air screen on a combine or other self-propelled harvesting equipment 10 or vehicle 10 has either a rotating screen 78 with a debris suck off wand 88 or a rotating wand 88 that sucks debris off of the screen 78. One aspect of the present invention details how the aspirator suck-off fan 96 has a variable speed that changes speed based on a speed of cooling fan 82. This allows lower aspiration levels at lower fan 82 speed to optimize the performance of the aspirator system 92.

The present invention uses a variable speed motor to drive the aspirator fan/fans 96 in order to change the speed of the fan 96 on the go. This is done hydraulically to have a simple drive, compared to a potential complicated mechanical drive.

The aspiration fans 96 increase their speed from 3500 rpm to 4000 rpm as the engine fan 82 rpm increases above 1800 rpm in order to have sufficient suction over the cooling fans 82 to be able to keep the air screen 78 clear of debris, and when the engine fans 82 decreased rpm the aspiration fans 96 decrease to allow efficient control of the cleaning of the air screens 78. In another embodiment of the present invention, the speed of aspirator fan 96 is changed based upon a differential pressure in the cooler box 72, as differential pressure increased in the cooler box the aspiration fans 96 would increase speed from 3500 to 4000 rpm in order to clear the air screen 78 of debris. This setup allows the air screen suction to be independent from the cooling fan speed. With this setup the aspiration could be increased if the screens 78 become fully covered at lower engine fan 82 rpm speeds to speed up the screen clean off process. When the differential pressure, as detected by sensor 98, lowers in the cooler box 72 the aspirators 96 would reduce rpm.

As a further embodiment it is contemplated to use both a detection of cooling fan 82 speed and the detection of differential pressure to both be triggering events for the control of aspiration fan 96 speed to keep the screens 78 as clean as possible in adverse conditions. This contemplation includes a change in the value of the differential pressure triggering event being made as the speed of cooling fan 82 changes. This aspect of the present invention advantageously allows the machine 10 to conserve more horsepower for other areas of the machine 10 if the screens 78 are clear and not ingesting a lot of debris.

While cooling packages use a high fan speed and high suck-off fan speed. The two compete against one another continuously. Optimizations to the wand have led to tradeoffs in the open area on the screen. Also, as cooling capacity requirements increase, higher fan speeds are required thus creating even higher suction pressure requirements. The system has begun to lose efficiency due to the high fan curves and competition between sub-systems.

The present invention allows controller 94 to be programed to implement the various embodiments, which may include the addition of sensor(s) and associated wiring. The current invention seeks to improve the control logics in place for the cooling system. The air screen 78 significantly improves in cleanliness when there is a slight reduction in engine fan 82 speed momentarily over the course of operation. The wand 88 is able to thoroughly clean the air screen 78 and "catch up" from instances of significant clogging. <<In maximum engine fan 82 speed conditions of the current system, it takes more than a minute at times to approach steady state for the suckoff system 92.>> The embodiments of the present invention all include methods to momentarily reduce, stop, or reverse engine fan 82 speed (closed or open loop controller designs). Control algorithms are used to control motor speed of the suck-off fan 96 motor in models that are hydraulically driven (not all combines are currently hydraulically driven for the suck-off fan motor). The inventive controls coordinate suck-off fan 96 motor speeds with what the total system is seeing in terms of debris collection. In at least one embodiment of the present invention the suck-off fan 96 speed is increased in timeframes related to the slowing of the engine fan 82 speed to maximize the system effectiveness. Closed loop embodiments of the present invention include sensing one or more of the following inputs to adjust engine fan 82 speeds (and suck-off fan 96 speeds in certain embodiments): (1.) Negative pressure within cooler box 72 or other locations correlated to debris collection on the air screen 78, as sensed by air pressure sensor 98. (2.) Back pressure on the hydraulic system of engine fan 82 drive or suck-off fan 96 drive, as sensed by hydraulic pressure sensor 100. (3.) Torque requirements for the drive of suck-off wand 88 system of other associated drive, as detected by way of torque sensor 102. (4.) Airflow through selected areas of cooling system70, as measured by airflow sensor 104. (5.) Air or other fluid temperature, as detected by fluid temperature sensor 106.

Open loop systems are also contemplated and have an advantage of using existing sensors that report other events, which will then not requiring additional sensors or wiring (these can be incorporated into the programming of controller 94): (1.) A timer 108 that causes engine fan 82 speed to cycle (and coordinates suck-off fan 96 speed in certain embodiments). For example: Every 7 minutes the engine fan 82 speed reduces speed to 70% for 15 seconds and suck-off fan 96 may increase speed during the 15 seconds. (2.) The cycling can relate to an unload event or selection 110 of combine 10 (the execution occurs just before unloading of the grain commences, the cycle can also be prompted by the extension of the unload tube 30 and before there is a horsepower spike). It is also contemplated to carry out a cleaning cycle just after the grain is unloaded. (3.) Distance traveled of machine 10 can trigger the cycle, as detected by a distance sensor 112, which may be part of an odometer. (4.) Grain tank fill sensor 114 is also contemplated as a triggering event.

In another embodiment of the present invention, controller 94 monitors the ratio of the RPM of suck-off fan 96 to the RPM of cooling fan 82, and the ratio is adjusted to some other more favorable ratio for a short predetermined time when triggered by a detected event, a sensor 98, 100, 102, 104, 106, 112, 114 output or a timer 108. This allows system 92 to take advantages of times in which events of the operation of harvester 10 are transitioning and provides an opportunity for an enhanced cleaning cycle to take place.

Advantages of the present invention are clearly demonstrated on test stand runs. The suck-off wand 88 thoroughly cleans the air screen 78 within a few seconds of a momentary reduction of engine fan 82 speed. The suck-off wand 88 motor often pushed to a high nominal rpm and benefits from being able to operate at a lower nominal rpm by the functionality of the momentary engine fan speed manipulations to allow air screen cleanliness to be maintained at a high level.

Advantages of the present invention are clearly demonstrated on test stand runs. The suck-off wand 88 thoroughly cleans the air screen 78 within a few seconds of a momentary reduction of engine fan 82 speed. The suck-off wand 88 motor often pushed to a high nominal rpm and benefits from being able to operate at a lower nominal rpm by the functionality of the momentary engine fan speed manipulations to allow air screen cleanliness to be maintained at a high level.

Additional advantages include: (1.) Quicker clearing of debris buildups (times when combine collects large amount of debris on screen 78 such as when passing another combine or wind direction shift) (2.) Higher efficiency in total system.

The advantages of the present invention are accomplished by the cycling or varying of the engine fan 82 speed under the various open and closed loop control options, and the coordination of engine fan 82 speed and suck-off fan 96 speed to optimize system 70 and the release of debris from air screen 78 and other air filter components.

## Claims

1. An agricultural vehicle (10), comprising:
an internal combustion engine (32);
a fluid cooling system (80) for cooling at least one component onboard the agricultural vehicle (10), the fluid cooling system (80) being positioned in association with the internal combustion engine (32), and including a housing (72), and at least one cooling unit (74) arranged within the housing (72), the cooling unit (74) including at least one cooling fan (82) having a rotational speed, the housing (72) including at least one air screen (78); and
an aspiration system (92) configured to clean debris from the air screen (78), the aspiration system (92) including:
a wand (88), at least one of the wand (88) and the air screen (78) being arranged to move such that the wand (88) over a period of time covers a substantial portion of the air screen (78);
a suck-off fan (96) in fluid communication with the wand (88), the suck-off fan (96) having a rotational speed; and
a controller (94);
**characterized by**: the controller (94) being in communication with the suck-off fan (96) and the cooling fan (82), and the controller (94) being configured to coordinate an increase in the speed of the suck-off fan (96) when the speed of the cooling fan (82) decreases.

2. The agricultural vehicle (10) of claim 1, wherein the controller (94) is further configured to one of reduce, stop and reverse the rotational speed of the cooling fan (82) for a predetermined time while the wand (88) cleans the air screen (78).

3. The agricultural vehicle (10) of claim 1 or 2, further comprising a sensor (98, 100, 102, 104, 106, 108, 110, 112, 114) providing a sensory input to the controller (94), the controller (94) initiating the reduction in the rotational speed of the cooling fan (82) dependent upon the sensory input, the sensory input being at least one of a negative pressure value within the housing (72), a back pressure value of a hydraulic system driving the cooling fan (82), a back pressure value of a hydraulic system driving the suck-off fan (96), a torque value for driving the wand (88), an airflow level through a portion of the housing (72), a temperature of a fluid, a timer (108) value, an unloading of grain condition (110), a distance traveled by the vehicle (10), a grain tank fill sensor (114).

4. The agricultural vehicle (10) of claim 1, wherein the suck-off fan (96) speed is increased once the cooling fan (82) speed exceeds 1,800 rpm.

5. The agricultural vehicle (10) of claim 1, wherein the controller (94) is additionally configured to increase the speed of the suck-off fan (96) in response to an increase in a differential pressure between inside the housing (72) and ambient air.

6. The agricultural vehicle (10) of claim 1, further comprising a sensor (98, 100, 102, 104, 106, 108, 110, 112, 114) providing a sensory input to the controller (94), the controller (94) initiating a timed cycle in which the cooling fan (82) speed is reduced and the suck-off fan (96) speed is increased dependent upon a triggering event being detected in the sensory input.

7. The agricultural vehicle (10) of claim 6, wherein the triggering event is a closed loop event including one of a negative pressure value within the housing (72), a back pressure value of a hydraulic system driving the cooling fan (82), a back pressure value of a hydraulic system driving the suck-off fan (96), a torque value for driving the wand (88), an airflow level through a portion of the housing (72), and a temperature of a fluid.

8. The agricultural vehicle (10) of claim 6, wherein the triggering event is an open loop event including one of a timer value, an unloading of grain condition, a distance traveled by the vehicle (10), a grain tank fill sensor (114) indicating a selected fill level.

## Patentansprüche

1. Landwirtschaftliches Fahrzeug (10) mit:
einem Verbrennungsmotor (32);
einem Flüssigkeitskühlsystem (80) zum Kühlen von mindestens einem Bestandteil an Bord des landwirtschaftlichen Fahrzeugs (10), wobei das Flüssigkeitskühlsystem (80) in Verbindung mit dem Verbrennungsmotor (32) angeordnet ist und ein Gehäuse (72) und mindestens eine Kühleinheit (74) umfasst, die innerhalb des Gehäuses (72) angeordnet ist, wobei die Kühleinheit (74) mindestens ein Kühlgebläse (82) mit einer Drehgeschwindigkeit umfasst, wobei das Gehäuse (72) mindestens ein Luftsieb (78) umfasst; und
einem Ansaugsystem (92), das zur Reinigung von Fremdkörpern von dem Luftsieb (78) eingerichtet ist, wobei das Ansaugsystem (92) aufweist:
einen Stab (88), wobei mindestens ein Element des Stabs (88) und des Luftsiebs (78) derart beweglich angeordnet sind, sodass der Stab (88) über eine Zeitdauer einen wesentlichen Bestandteil des Luftsiebs (78) abdeckt;
ein Absauggebläse (96) in Fluidverbindung mit dem Stab (88), wobei das Absauggebläse (96) eine Drehgeschwindigkeit aufweist; und
eine Steuereinrichtung (94);
**gekennzeichnet dadurch, dass**:
die Steuereinrichtung (94) in Kommunikationsverbindung mit dem Absauggebläse (96) und dem Kühlgebläse (82) steht, und dass die Steuereinrichtung (94) dazu eingerichtet ist, eine Geschwindigkeitserhöhung des Absauggebläses (96) zu steuern bzw. zu koordinieren, wenn die Geschwindigkeit des Kühlgebläses (82) abnimmt.

2. Landwirtschaftliches Fahrzeug (10) nach Anspruch 1, wobei die Steuereinrichtung (94) des Weiteren dazu eingerichtet ist, die Drehgeschwindigkeit des Kühlgebläses (82) für einen vorbestimmten Zeitraum zu reduzieren, anzuhalten und umzukehren, solange der Stab (88) das Luftsieb (78) reinigt.

3. Landwirtschaftliches Fahrzeug (10) nach Anspruch 1 oder 2, das des Weiteren einen Sensor (98, 100, 102, 104, 106, 108, 110, 112, 114) aufweist, der eine Sensoreingabe für die Steuereinrichtung (94) bereitstellt, wobei die Steuereinrichtung (94) die Reduzierung der Drehgeschwindigkeit des Kühlgebläses (82) in Abhängigkeit der Sensoreingabe startet, wobei die Sensoreingabe mindestens ein Element ist aus einem negativen Druckwert innerhalb des Gehäuses (72), einem Gegendruckwert eines hydraulischen Systems, das das Kühlgebläse (82) antreibt, einem Gegendruckwert eines hydraulischen Systems, das das Absauggebläse (96) antreibt, ein Drehmomentwert zum Antreiben des Stabs (88), ein Luftstromwert durch einen Abschnitt des Gehäuses (72), eine Flüssigkeitstemperatur, ein Wert einer Zeitschaltuhr (108), ein Kornabladezustand (110), ein von dem Fahrzeug (10) zurückgelegter Weg, ein Korntankfüllsensor (114).

4. Landwirtschaftliches Fahrzeug (10) nach Anspruch 1, wobei die Geschwindigkeit des Absauggebläses (96) erhöht wird, sobald die Geschwindigkeit des Kühlgebläses (82) 1.800 Umdrehungen pro Minute (rpm) überschreitet.

5. Landwirtschaftliches Fahrzeug (10) nach Anspruch 1, wobei die Steuereinrichtung (94) zusätzlich dazu eingerichtet ist, die Geschwindigkeit des Absauggebläses (96) als Reaktion auf eine Erhöhung in einem Differenzdruck zwischen dem Inneren des Gehäuses (72) und der Umgebungsluft zu erhöhen.

6. Landwirtschaftliches Fahrzeug (10) nach Anspruch 1, das des Weiteren einen Sensor (98, 100, 102, 104, 106, 108, 110, 112, 114) aufweist, der eine Sensoreingabe an die Steuereinrichtung (94) bereitstellt, wobei die Steuereinrichtung (94) einen zeitgesteuerten Zyklus beginnt, bei dem die Geschwindigkeit des Lüfters (82) reduziert wird und die Geschwindigkeit des Absauggebläses (96) erhöht wird, in Abhängigkeit eines auslösenden Ereignisses, das in der Sensoreingabe erfasst wird.

7. Landwirtschaftliches Fahrzeug (10) nach Anspruch 6, wobei das auslösende Ereignis ein Ereignis eines geschlossenen Regelkreises ist einschließlich eines negativen Druckwerts innerhalb des Gehäuses (72), eines Gegendruckwerts eines hydraulischen Systems, das das Kühlgebläse (82) antreibt, ein Gegendruckwert eines hydraulischen Systems, das das Absauggebläse (96) antreibt, ein Drehmomentwert zum Antreiben des Stabes (88), ein Luftstromwert durch einen Abschnitt des Gehäuses (72) und eine Flüssigkeitstemperatur.

8. Landwirtschaftliches Fahrzeug (10) nach Anspruch 6, wobei das auslösende Ereignis ein Ereignis eines offenen Regelkreises ist einschließlich eines Zeitschaltuhrwerts, eines Kornabladezustands, eines durch das Fahrzeug (10) zurückgelegten Weges, eines Korntankfüllsensors (114), der einen ausgewählten Füllwert angibt.

## Revendications

1. Véhicule agricole (10) comprenant :
un moteur à combustion interne (32),
un système de refroidissement par fluide (80) pour refroidir au moins un composant à bord du véhicule agricole (10), le système de refroidissement par fluide (80) étant positionné en association avec le moteur à combustion interne (32), et incluant un boîtier (72) et au moins un bloc de refroidissement (74) disposé à l'intérieur du boîtier (72), le bloc de refroidissement (74) incluant au moins un ventilateur de refroidissement (82) ayant une vitesse de rotation, le boîtier (72) incluant au moins un filtre à air (78), et
un système d'aspiration (92) configuré pour nettoyer les débris du filtre à air (78), le système d'aspiration (92) incluant :
une baguette (88), la baguette (88) et/ou le filtre à air (78) étant agencés pour se déplacer de telle sorte que la baguette (88) recouvre une partie substantielle du filtre à air (78) pendant une certaine période,
un ventilateur d'aspiration (96) en communication de fluide avec la baguette (88), le ventilateur d'aspiration (96) ayant une vitesse de rotation, et un dispositif de commande (94),
**caractérisé en ce que** le dispositif de commande (94) est en communication avec le ventilateur d'aspiration (96) et le ventilateur de refroidissement (82) et **en ce que** le dispositif de commande (94) est configuré pour coordonner une augmentation de la vitesse du ventilateur d'aspiration (96) lorsque la vitesse du ventilateur de refroidissement (82) diminue.

2. Véhicule agricole (10) selon la revendication 1, dans lequel le dispositif de commande (94) est configuré en outre pour réduire, arrêter ou inverser la vitesse de rotation du ventilateur de refroidissement (82) pendant une période prédéterminée lorsque la baguette (88) nettoie le filtre à air (78).

3. Véhicule agricole (10) selon la revendication 1 ou 2, comprenant en outre un capteur (98, 100, 102, 104, 106, 108, 110, 112, 114) délivrant une entrée de détection au dispositif de commande (94), le dispositif de commande (94) initiant la réduction de la vitesse de rotation du ventilateur de refroidissement (82) en fonction de l'entrée de détection, l'entrée de détection étant au moins un(e) des suivant(e)s : une valeur de pression négative à l'intérieur du boîtier (72), une valeur de contre-pression d'un système hydraulique entraînant le ventilateur de refroidissement (82), une valeur de contre-pression d'un système hydraulique entraînant le ventilateur d'aspiration (96), une valeur de couple pour actionner la baguette (88), une niveau de débit d'air à travers une partie du boîtier (72), une température d'un fluide, une valeur de temporisateur (108), un état de déchargement de grain (110), une distance parcourue par le véhicule (10), un capteur de remplissage (114) du réservoir à grain.

4. Véhicule agricole (10) selon la revendication 1, dans lequel la vitesse du ventilateur d'aspiration (96) est augmentée une fois que la vitesse du ventilateur de refroidissement (82) devient supérieure à 1.800 t/min.

5. Véhicule agricole (10) selon la revendication 1, dans lequel le dispositif de commande (94) est configuré en outre pour augmenter la vitesse du ventilateur d'aspiration (96) en réaction à une augmentation d'une pression différentielle entre l'intérieur du boîtier (72) et l'air ambiant.

6. Véhicule agricole (10) selon la revendication 1, comprenant en outre un capteur (98, 100, 102, 104, 106, 108, 110, 112, 114) délivrant une entrée de détection au dispositif de commande (94), le dispositif de commande (94) initiant un cycle temporisé dans lequel la vitesse du ventilateur de refroidissement (82) est réduite et la vitesse du ventilateur d'aspiration est augmentée en fonction d'un événement déclencheur détecté dans l'entrée de détection.

7. Véhicule agricole (10) selon la revendication 6, dans lequel l'événement déclencheur est un événement en boucle fermée incluant un(e) des suivant(e)s : une valeur de pression négative à l'intérieur du boîtier (72), une valeur de contre-pression d'un système hydraulique entraînant le ventilateur de refroidissement (82), une valeur de contre-pression d'un système hydraulique entraînant le ventilateur d'aspiration (96), une valeur de couple pour actionner la baguette (88), un niveau de débit d'air à travers une partie du boîtier (72) et une température d'un fluide.

8. Véhicule agricole (10) selon la revendication 6, dans lequel l'événement déclencheur est un événement en boucle ouverte incluant un(e) des suivant(e)s : une valeur de chronométreur, un état de déchargement de grain, une distance parcourue par le véhicule (10), un capteur de remplissage (114) de réservoir à grain indiquant un niveau de remplissage sélectionné.
